# EUROPÄISCHE PATENTANMELDUNG

(11) **EP 2 608 382 A1**
(43) Veröffentlichungstag der Anmeldung: **26.06.2013**
(21) Anmeldenummer: 11194178.7
(22) Anmeldetag: 19.12.2011
(51) Int. Cl.: H02M 7/48

(54) **Modularer Hochfrequenz Umrichter**

(71) Anmelder: Siemens Aktiengesellschaft, 80333 München (DE)
(72) Erfinder: Völkel, Stefan, 91058 Erlangen (DE)

(57) **Zusammenfassung**

Die Erfindung betrifft einen modularen Umrichter (4) zum Übertragen elektrischer Leistung. Der modulare Umrichter (4) umfasst ein erstes Submodul (22) mit einem parallel zwischen einer Eingangsseite (26,28) des ersten Submoduls (22) und einer Ausgangsseite (30,32) des ersten Submoduls (22) verschalteten ersten Kondensator (44) und ein zum ersten Submodul (22) in Reihe geschaltetes zweites Submodul (22) mit einem parallel zwischen einer Eingangsseite (26,28) des zweiten Submoduls (22) und einer Ausgangsseite (30,32) des zweiten Submoduls (22) verschalteten zweiten Kondensator (44). Dabei umfasst jedes Submodul (22) einen parallel zum jeweiligen Kondensator (44) geschalteten Schalter (64) zum Kurzschließen des jeweiligen Kondensators (44).

## Beschreibung

Die Erfindung betrifft eine Stromrichterschaltung gemäß dem Oberbegriff des Anspruchs 1, ein Verfahren zum Entladen eines Zwischenkreiskondensators in einem Submodul der Stromrichterschaltung, eine Steuervorrichtung zur Durchführung des Verfahrens und einen Elektromotor mit der Stromrichterschaltung.

Eine Stromrichterschaltung zur elektrischen Energieversorgung der Motorwicklungen eines Elektromotors in einem Fahrzeugantrieb ist beispielsweise aus der Veröffentlichung Lukas Lamberts et al, "Modularer Hochfrequenz Umrichter für Fahrzeugantriebe", EMA 2010, 08. bis 09. September 2010, Aschaffenburg bekannt.

Dabei handelt es sich um eine Schaltung, die zum Umwandeln einer Gleichspannung aus einer elektrischen Leistungsquelle in mehrere Wechselspannungen vorgesehen ist. Die einzelnen Wechselspannungen werden durch in Reihe geschaltete Submodule erzeugt, an denen eingangsseitig jeweils ein Teil der Gleichspannung abfällt. Submodulintern wird der entsprechende Teil der Gleichspannung jeweils über eine als Wechselrichter arbeitende einphasige Vollbrücke in eine Wechselspannung umgewandelt, die an eine der Motorwicklungen abgegebenen werden kann. Die einphasige Vollbrücke umfasst zwei einphasige Halbbrücken, die jeweils zur Erzeugung einer Wechselspannungsphase vorgesehen sind, sodass die beiden Wechselspannungsphasen in der Summe eine einphasige Wechselspannung ergeben.

Die an den Eingängen der einzelnen Submodule abfallenden Teilspannungen werden vor der Wechselrichtung durch die Vollbrücke mittels eines Hochsetzstellers erhöht. Der Hochsetzsteller umfasst eine Induktivität, die in Reihe zwischen der elektrischen Leistungsquelle und der Reihenschaltung der Submodule verschaltet ist, sowie eine Eingangshalbbrücke in jedem Submodul. Die Vollbrücke und die Halbbrücke sind submodulintern gleichspannungsseitig verschaltet.

Parallel zur Vollbrücke und zur Eingangshalbbrücke in jedem Submodul ist ein Zwischenkreiskondensator verschaltet, der elektrische Energie, beispielsweise aus einem Blindleistungsfluss von den Motorwicklungen, zwischenspeichern kann.

Es ist Aufgabe der Erfindung, die bekannte Stromrichterschaltung zu verbessern.

Die Aufgabe wird durch die Merkmale der unabhängigen Ansprüche gelöst. Bevorzugte Weiterbildungen sind Gegenstand der abhängigen Ansprüche.

Die Erfindung schlägt vor, in einer Stromrichterschaltung aus einer Reihenschaltung mehrerer Submodulen, in jedem Submodule eine eigene Entladeschaltung zur Entladung eines Zwischenkreiskondensators des Submoduls zu verschalten.

Die Erfindung geht von der Überlegung aus, dass die Stromrichterschaltung alternativ aus einer Parallelschaltung mehrerer Submodule aufgebaut werden könnte. Unter bestimmten Umständen, wie beispielsweise im Fehlerfall müssten die Zwischenkreiskondensatoren entladen werden. Die Entladung eines Zwischenkreiskondensators führt dazu, dass durch das betreffende Submodul keine weitere elektrische Energie mehr übertragen werden kann.

Zudem werden bei der Entladung eines einzelnen Zwischenkreiskondensators eines bestimmten Submoduls in einer Parallelschaltung der Submodule andere Submodule stets mit beeinträchtigt, da die Entladung eines Zwischenkreiskondensators durch die Parallelschaltung stets Auswirkungen auf die restlichen Zwischenkreiskondensatoren hat. In einer Parallelschaltung der Submodule verhindert die Entladung eines Zwischenkreiskondensators somit die elektrische Energieübertragung durch alle Submodule.

Ferner wäre es möglich, jeden Zwischenkreiskondensator mit einer eigenen, redundanten Entladeschaltung zu entladen. Aufgrund der Parallelschaltung der einzelnen Zwischenkreiskondensatoren kann diese Redundanz jedoch nicht genutzt werden.

Der Erfindung liegt die Erkenntnis zugrunde, dass in einer Reihenschaltung der Submodule eine Entladeschaltung für den Zwischenkreiskondensator eines einzigen Submoduls den Zwischenkreiskondensator nicht nur entlädt, sondern das entsprechende Submodul in der Reihenschaltung der Submodule auch überbrückt. Durch eine redundante Entladeschaltung in jedem einzelnen Submodul einer Stromrichterschaltung mit einer Reihenschaltung aus den Submodulen können somit die Zwischenkreiskondensatoren einzelner Submodule individuell entladen und aus dem Leistungskreis der Stromrichterschaltung herausgenommen werden, ohne dass die verbleibenden Submodule in ihrer Funktion beeinträchtigt sind.

Die Erfindung gibt daher eine Stromrichterschaltung an, die wenigstens zwei Submodule in Reihenschaltung umfasst, die über eine Induktivität elektrische Leistung aus einer eine Gleichspannung abgebenden Leistungsquelle bezieht. Dabei weist jedes Submodul eingangsseitig eine einphasige Halbbrücke und lastseitig eine einphasige Vollbrücke auf. Ferner sind die Halbbrücke und die Vollbrücke gleichspannungsseitig sowie parallel hierzu ein Zwischenkreiskondensator geschalten. Die Stromrichterschaltung umfasst eine Entladeschaltung in jedem Submodul zum Entladen des Zwischenkreiskondensators des jeweiligen Submoduls.

Durch die Möglichkeit, die Zwischenkreiskondensatoren in jedem Submodul der Stromrichterschaltung individuell zu entladen, können an die Stromrichterschaltung angeschlossene elektrischer Verbraucher im Fehlerfall unter bestimmten applikationsabhängigen Voraussetzungen einfacher gewartet werden. Wird die Stromrichterschaltung beispielsweise in einem Fahrzeug mit einem Elektromotor als elektrischen Verbraucher zur elektrischen Energieversorgung der als Motorwicklung ausgebildeten elektrischen Lasten eingesetzt, so kann der Elektromotor durch die redundant ausgebildeten Entladeschaltungen in den Submodulen auch nach einem Ausfall einer Motorwicklung durch die Entladung des entsprechenden Zwischenkreiskondensators weiterbetriebenen werden. Das Fahrzeug kann somit weiterbewegt und zur Wartung in eine Werkstatt gefahren werden. Ohne die individuelle Entladung der Zwischenkreiskondensatoren wäre das Fahrzeug fahruntauglich und müsste abgeschleppt werden.

Die Vollbrücke ist aus zwei Einzelhalbbrücken aufgebaut, wobei die Eingangshalbbrücke und die Einzelhabbrücken der Vollbrücke jeweils eine Reihenschaltung aus zwei Brückenarmen aufweisen. Diese drei Reihenschaltungen sind im Submodul zueinander parallel verschaltet. Dabei wird an einem der beiden Brückenarme der Eingangshalbbrücke die umzuwandelnde Teilspannung der Gleichspannung angelegt und zwischen einem Brückenzweig der beiden Einzelhalbbrücken der Vollbrücke die auszugebende Wechselspannung abgegriffen. Die Vollbrücke kann auch mehrphasig sein und eine entsprechend hohe Anzahl an parallel geschalteten Einzelhalbbrücken aufweisen.

Gemäß einer Weiterbildung umfasst die Entladeschaltung einen parallel zum Zwischenkreiskondensator geschalteten Entladeschalter. Über diesen Entladeschalter lässt sich die Entladung steuern. Der Schalter kann selbstgesteuert, wie im Falle einer Diode, oder fremdgesteuert sein, wie im Falle eines Transistors. Während ein selbstgesteuerter Schalter unmittelbar auf die Entladung auslösende Ereignisse, z.B. einen Fehler reagiert, können fremdgesteuerte Schalter bzw. Transistoren vielseitiger eingesetzt werden.

In einer anderen Weiterbildung umfasst die Entladeschaltung eine in Reihe zum Entladeschalter geschaltete Kurzschlusslast. Über die Kurzschlusslast kann die im Kondensator gespeicherte elektrische Energie aufgenommen und aus dem angegebenen Umrichter abgeführt werden. Die Kurzschlusslast kann beispielsweise induktiv sein. Ein durch die Parallelschaltung mit dem Zwischenkreiskondensator entstehendes Schwingen des Entladestromes könnte mit einer Rückschwingdiode unterbunden werden.

Besonders bevorzugt ist die Kurzschlusslast rein ohmsch. Durch eine rein ohmsche Kurzschlusslast kann nicht nur auf weitere Schaltungselemente verzichtet werden, was sich mindernd auf den Bauraum und die Kosten der Entladeschaltung auswirkt. Eine Entladung eines Zwischenkreiskondensators über eine rein ohmsche Last verläuft auch vergleichsweise schnell, da die im Zwischenkreiskondensator gespeicherte elektrische Energie an der ohmschen Last direkt in Wärme umgewandelt wird.

In einer besonderen Weiterbildung ist der Entladeschalter geeignet zu schließen, wenn eine am Zwischenkreiskondensator abfallende Spannung von einem vorgegeben Spannungsbereich abweicht. Anhand der am Zwischenkreiskondensator abfallenden Spannung lässt sich auf direkte Weise erkennen, ob einen Fehler vorliegt. Durch den vorgegeben Spannungsbereich für die Spannung am Zwischenkreiskondensator ist damit ein Kriterium zum unmittelbaren Überwachen der Submodule auf Fehler hin geschaffen, auf die durch das Entladen des Zwischenkreiskondensators rasch reagiert werden kann.

Gemäß einer bevorzugten Weiterbildung ist der Entladeschalter geeignet zu schließen, wenn eine am Entladeschalter abfallende Spannung eine Überspannungsschwelle erreicht hat. Diese Überspannungsschwelle kann beispielsweise durch die charakteristischen Eigenschaften einer break over diode als Entladeschalter vorgegeben werden, wobei die break over diode automatisch schließt, wenn die an dieser Diode abfallende Spannung die Überspannungsschwelle überschritten hat.

In einer besonders bevorzugten Weiterbildung der umfasst die eingangsseitige einphasige Halbbrücke einen eingangsseitig parallel geschalteten ersten Halbbrückenschalter und einen zweiten Halbbrückenschalter, der in Reihe zwischen dem ersten Halbbrückenschalter und dem Zwischenkreiskondensator geschaltet ist. Durch den ersten Schalter kann das entsprechende Submodul eingangsseitig überbrückt werden, so dass die elektrische Leistung aus der elektrischen Leistungsquelle am Submodul vorbeigeführt wird. Der zweite Schalter unterbricht einen Stromkreis durch das entsprechende Submodul und verhindert einen Reststrom durch das entsprechende Submodul. Ferner wird durch die Anordnung des ersten und zweiten Schalters ein Hochsetzsteller in Verbindung mit der Induktivität der Stromrichterschaltung umgesetzt.

Die Erfindung gibt auch ein Verfahren zum Entladen eines Kondensators in einem Submodul einer modularen Stromrichterschaltung an. Das Verfahren umfasst den Schritt des Entladens des Zwischenkreiskondensators mit der Entladeschaltung, bis eine am Zwischenkreiskondensator abfallende Spannung eine bestimmte Entladespannungsschwelle unterschritten hat. Die Entladespannungsschwelle kann auf jeden beliebigen Wert gesetzt werden, der ausreicht, das Submodul in einen sicherheitsunkritischen Zustand zu überführen. Dies ist applikationsabhängig. So könnte die Entladespannungsschwelle beispielsweise Null betragen. Sie kann aber auch auf einen Wert über Null festgelegt werden, wenn beispielsweise eine Restspannung im Zwischenkreiskondensator sicherheitstechnisch unbedenklich ist.

In einer Weiterbildung umfasst das angegebene Verfahren Erfassen einer Fehlfunktion in der Stromrichterschaltung und ein Unterbrechen einer elektrischen Leistungszufuhr, insbesondere aus einer eine Gleichspannung abgebenden Gleichspannungsquelle, zur Stromrichterschaltung nachdem die Fehlfunktion in der Stromrichterschaltung erfasst ist. Auf diese Weise kann die gesamte Stromrichterschaltung, in einen sicheren Zustand überführt werden. Ist die elektrische Last beispielsweise als Motorwicklung Teil eines Elektromotors eines Fahrzeuges, so kann beispielsweise im Falle eines Unfalls mit dem Fahrzeug vermieden werden, dass sich ein Unfallopfer oder andere Personen am aufgeladenen Zwischenkreiskondensator verletzen.

In einer anderen Weiterbildung umfasst das angegebene Verfahren das Erfassen, ob ein das Submodul umgebenes Gehäuse und/oder ein die Stromrichterschaltung umgebenes Gehäuse geöffnet ist, und im Anschluss daran das Abschalten einer Versorgungsspannung der Stromrichterschaltung. Auf diese Weise können Schäden vermieden werden, die im Falle eines beabsichtigten oder unbeabsichtigten Öffnens des Gehäuses und eines unbeabsichtigten Berührens des Submodulschaltkreises durch Personen oder andere technische Elemente entstehen können.

Gemäß einer weiteren Weiterbildung umfasst das angegebene Verfahren die Schritte des Erfassens einer Fehlfunktion im Submodul und das Abschalten der Eingangsspannung des Submoduls, nachdem die Fehlfunktion im Submodul erfasst ist. Die Abschaltung des Submoduls selbst kann dabei ebenfalls durch eine Abschaltung der Versorgungsspannung der gesamten Stromrichterschaltung erfolgen, so dass auch automatisch die Eingangsspannung am Submodul abgeschaltet ist. Eine alternative Ausführung der Abschaltung der Eingangsspannung des Submoduls ist Gegenstand der Unteransprüche.

In einer bevorzugten Weiterbildung umfasst das angegebene Verfahren das Erfassen der Fehlfunktion im Submodul, wenn die Spannung am Zwischenkreiskondensator eine Überspannungsschwelle überschreitet. Die Überspannungsschwelle kann derart gewählt sein, dass sie mit einem bestimmten Toleranzbereich über der gewöhnlichen Betriebsspannung des Zwischenkreiskondensators liegt. Diese Überspannungsschwelle bietet ein Kriterium, um sicherheitskritische Störungen im Submodul zu erkennen, die ein Abschalten des Submoduls notwendig erscheinen lassen.

In einer besonders bevorzugten Weiterbildung umfasst das angegebene Verfahren das Überbrücken des Submoduls aus der Stromrichterschaltung zum Abschalten der Eingangsspannung des Submoduls. Das heißt, dass das Submodul der Stromrichterschaltung aus einem Leistungskreis der Stromrichterschaltung herausgenommen wird, ohne dass andere Submodule von dieser Unterbrechung der Leistungszufuhr zum betroffenen Submodul beeinträchtigt werden. Auf diese Weise lässt sich das Submodul lokal schützen. Ein elektrischer Verbraucher, der an die einzelnen Submodule angeschlossene elektrische Lasten umfasst, kann jedoch nach Art eines Notprogramms weiterhin betrieben werden.

In einer alternativen Weiterbildung umfasst das angegebene Verfahren das Regeln eines Stromes durch die Entladeschaltung mit dem Schalter als Stellglied. Hierdurch lässt sich auf einfache Weise der Entladestrom sicher begrenzen.

In einer bevorzugten Weiterbildung der Erfindung umfasst die Regelung des Endladestroms eine Zweipunktregelung mit eingebauter Hysterese, die ein Schwingen des Stromes durch den Zweig des Schalters vermeidet.

Die Erfindung gibt auch eine Steuervorrichtung zur Durchführung des angegebenen Verfahrens an. Die Steuervorrichtung weist einen Speicher und einen Prozessor auf. Dabei ist das Verfahren in Form eines Computerprogramms in dem Speicher hinterlegt. Der Prozessor ist zur Ausführung des Verfahrens vorgesehen, wenn das Computerprogramm aus dem Speicher in den Prozessor geladen ist.

Die Erfindung gibt auch einen Elektromotor für ein Fahrzeug an, der mehrere Motorwicklungen und eine angegebene Stromrichterschaltung mit einer der Anzahl der Motorwicklungen entsprechenden Anzahl von Submodulen umfasst, wobei jedes Submodul ausgangsseitig an eine Motorwicklung angeschlossen ist.

Nachfolgend werden Ausführungsbeispiele der Erfindung anhand einer Zeichnung näher erläutert. Darin zeigen:
- FIG 1: eine Schaltung mit einer Stromrichterschaltung und
- FIG 2: ein Submodul der Stromrichterschaltung.

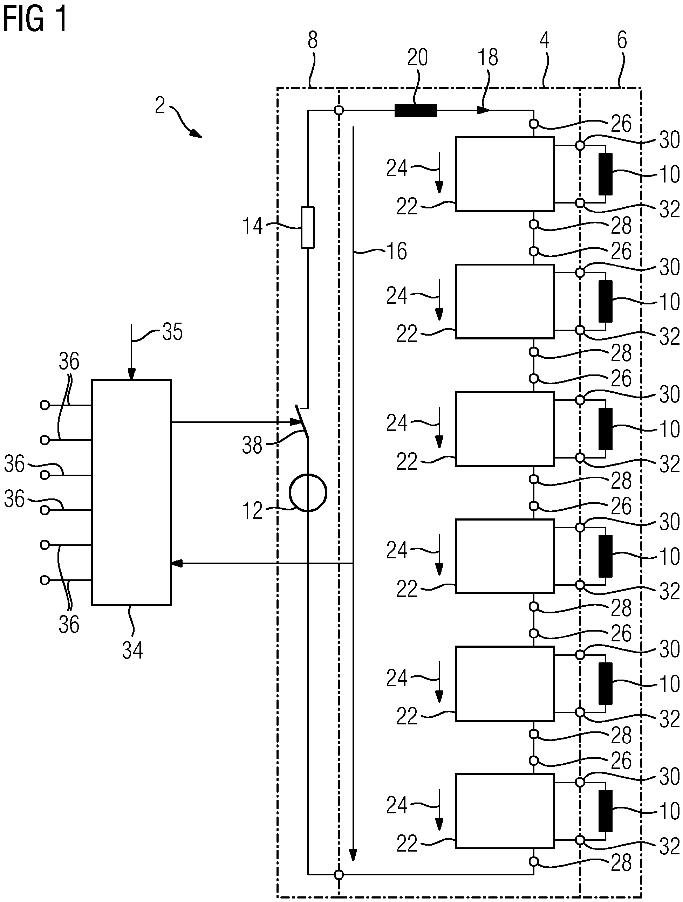

FIG 1 Bezug zeigt eine Schaltung 2 mit einer beispielhaften Stromrichterschaltung 4. Die Stromrichterschaltung 4 speist einen elektrischen Verbraucher 6 mit elektrischer Leistung aus einer elektrischen Leistungsquelle 8. Der elektrische Verbraucher 6 ist in der vorliegenden Ausführung als Elektromotor eines Fahrzeuges ausgebildet und weist sechs elektrische Lasten 10 auf, wobei jede elektrische Last 10 eine Motorwicklung des Elektromotors darstellt.

Die elektrische Leistungsquelle 8 ist in der vorliegenden Ausführung eine Batterie, die sich in eine Spannungsquelle 12 mit einem dazu in Reihe angeschlossenen Innenwiderstand 14 zerlegen lässt. Die Batterie 8 legt an die Stromrichterschaltung 4 eine Batteriespannung 16 an und gibt an den modularen Umrichter 4 einen Batteriestrom 18 ab. Die Batteriespannung 16 ist eine Gleichspannung, und der Batteriestrom 18 ist ein Gleichstrom.

Die Stromrichterschaltung 4 weist eingangsseitig eine Induktivität 20, beispielsweise eine Drossel, auf. Es ist jedoch auch möglich, dass diese Induktivität 20 allein durch die Verbindungsleitung zur Batterie 8 realisiert wird. An diese Induktivität 20 schließt sich in Reihe eine Reihenschaltung aus sechs noch zu beschreibenden Submodulen 22 an. An den einzelnen Submodulen 22 fällt jeweils eine Teilspannung 24 ab. Ferner ist an jedes Submodul 22 jeweils eine elektrische Last 10 angeschlossen. Basierend auf den Teilspannungen 24 versorgen die Submodule 22 auf diese Weise die elektrischen Lasten 10 mit elektrischer Energie in einer noch zu beschreibenden Weise. Für die Anzahl der Submodule 22 und elektrischen Lasten 10 wurde in der vorliegenden Ausführung sechs gewählt. Die Stromrichterschaltung 4 kann jedoch eine beliebig hohe Anzahl an Submodulen 22 aufweisen und damit eine beliebig hohe Anzahl an elektrischen Lasten 10 speisen. Je mehr Submodule 22 jedoch in der Reihenschaltung verschaltet sind, desto kleiner werden die entsprechenden Teilspannungen 24.

Jedes Submodul 22 weist eine erste Eingangsklemme 26, eine zweite Eingangsklemme 28, eine erste Ausgangsklemme 30 und eine zweite Ausgangsklemme 32 auf. Während über den ersten und zweiten Eingangsklemmen 26, 28 jeweils die Teilspannungen 24 abfallen, sind an die ersten und zweiten Ausgangsklemmen 30, 32 die elektrischen Lasten 10 angeschlossen.

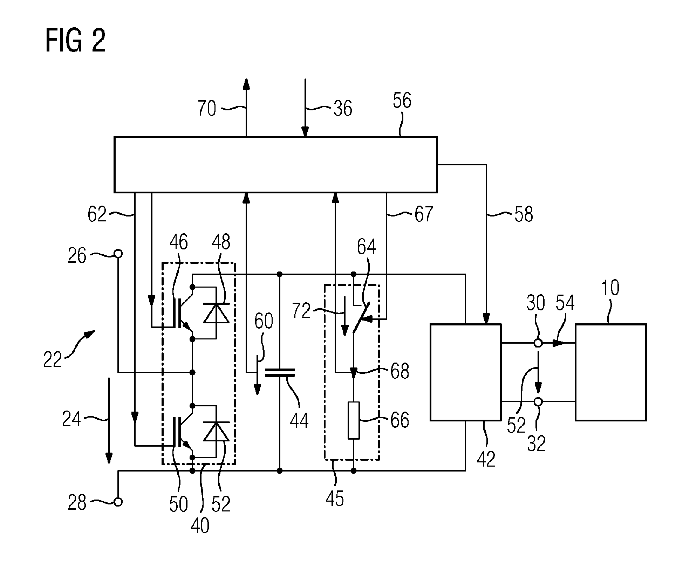

Die Schaltung 2 umfasst ferner ein übergeordnetes Steuergerät, im Folgenden Master 34 genannt, das die Erzeugung des Drehfeldes mit den als Motorwicklungen ausgebildeten elektrischen Lasten 10 des als Elektromotor ausgebildeten elektrischen Verbrauchers 6 steuert. In einem Fahrzeug kann der Master 34 beispielsweise das Motormanagement des Fahrzeuges sein. Dazu kann der Master 34 eine Drehzahl 35 des als Elektromotor ausgebildeten elektrischen Verbrauchers 6 empfangen und basierend auf Stellsignalen 36 die einzelnen Submodule 22 ansteuern. Basierend auf den Stellsignalen 36 stellen die einzelnen Submodule 22 einen in FIG 2 gezeigten elektrischen Strom 60 durch die als Motorwicklungen ausgebildeten elektrischen Lasten 10 ein, um das Drehfeld zu erzeugen.

Der Master 34 ist ferner vorgesehen, um die Batteriespannung 16 zu erfassen. Anhand der Batteriespannung 16 überprüft der Master 34 die Schaltung 2 auf Fehler hin. Ist die Batteriespannung 16 beispielsweise zu gering, so ist dies ein Anzeichen für einen Kurzschluss. Im Fehlerfall überführt der Master 34 die Schaltung 2 in einen sicheren Zustand, indem dieser einen Schalter 38 öffnet, der beispielsweise intern in der Batterie 8 angeordnet sein kann.

FIG 2 zeigt beispielhaft den Aufbau eines der Submodule 22 in dem modularen Umrichter gemäß FIG 1. In FIG 2 sind zu FIG 1 gleiche Elemente mit gleichen Bezugszeichen versehen.

Das Submodul 22 weist eine Eingangshalbbrücke 40, eine Vollbrücke 42, einen Zwischenkreiskondensator 44 und eine Entladeschaltung 45 zum Entladen des Zwischenkreiskondensators 44 auf, wobei diese Bausteine oder Elemente 40, 42, 44 und 45 miteinander parallel verschaltet sind.

Die Eingangshalbbrücke 40 weist in einem ersten Brückenarm einen ersten Schalter 46 und eine dazu parallel geschaltete erste Freilaufdiode 48 sowie in einem zweiten Brückenarm einen zum ersten Schalter 46 in Reihe geschalteten zweiten Schalter 50 und eine dazu parallel geschaltete zweite Freilaufdiode 52 auf. Die Schalter können als Leistungshalbleiterschalter, wie beispielsweise MOSFETs (Metalloxid-Feldeffekttransistor) ausgebildet sein. Abhängig von der Art des Leistungshalbleiterschalters können die Freilaufdioden 48, 52 auch weggelassen werden.

Die erste Teilspannung 24 ist an den zweiten Schalter 50 angelegt, während der erste Schalter 46 in Reihe zwischen den zweiten Schalter 50 und den Wechselrichter 42 geschaltet ist. Somit kann der zweite Schalter 50 aus Sicht der Vollbrücke 42 den Eingang aus der Batterie 8 kurzschließen, während der erste Schalter 46 (bei geöffnetem zweiten Schalter 50) die Vollbrücke 50 in den Strompfad der Batterie 8 legen kann. Werden in jedem Submodul 22 die Schalter 46, 50 in gleicher Weise abwechselnd geöffnet und geschlossen, so ist gemeinsam mit der Induktivität 20 ein Hochsetzsteller geschaffen, der die Summe aller an den Submodulen 22 abfallenden Teilspannungen 24 höher setzt als die Batteriespannung 16. Weiterhin kann durch die Eingangshalbbrücke 40 die Vollbrücke 42 auch dauerhaft aus der Reihenschaltung der sechs Submodule 22 entfernt werden, wenn der zweite Schalter 50 dauerhaft geschlossen bleibt.

Der Vollbrücke 42 dient zum Wechselrichten der am Eingang 26, 28 des Submoduls 22 abfallenden Teilspannung 24 in eine Wechselspannung 53 am Ausgang 30, 32 des Submoduls 22. Dazu weist die Vollbrücke 42 in nicht gezeigter Weise zwei Halbbrücken auf, die entsprechend der Eingangshalbbrücke 40 aufgebaut sind. Die Eingangshalbbrücke 40 und die beiden Halbbrücken der Vollbrücke 42 sind parallel miteinander verschaltet. An einem Brückenzweig der Vollbrücke 42 kann die Wechselspannung 53 abgegriffen werden. Entsprechend wird an die elektrische Last 10 ein Wechselstrom 54 abgegeben.

Zur Ansteuerung der Vollbrücke 42 ist im Submodul 22 ein lokales Steuergerät, nachstehend Slave 56 genannt, vorgesehen. Der Slave 56 empfängt vom Master 34 über eine nicht gezeigte sichere elektrische Trennung das Stellsignal 36. Basierend auf dem Stellsignal 36 gibt der Slave 56 ein oder mehrere Stellsignale 58 an die Vollbrücke 42 aus, die basierend auf den Stellsignalen 58 die Frequenz der Wechselspannung 53 und damit des Wechselstromes 54 einstellt.

Der Slave 54 kann ferner anhand einer am Zwischenkreiskondensator 44 abfallenden Spannung 60 einen Fehler im Submodul 22 erfassen. Der Zwischenkreiskondensator 44 ist zur Zwischenspeicherung von elektrischer Energie aus der elektrischen Last 10 aufgrund eines Blindleistungsflusses vorgesehen, die das Submodul 22 aufgrund der vorgegebenen Richtung des Batteriestromes 18 und der Batteriespannung 16 nicht verlassen kann. Der Blindleistungsfluss ist jedoch begrenzt, so dass auch die Spannung 60 am Zwischenkreiskondensator 44 begrenzt ist. Überschreitet diese einen bestimmten Wert, so ist dies demnach ein Hinweis auf einen fehlerhaften elektrischen Energiefluss durch das Submodul 22, da der Zwischenkreiskondensator 44 nun nicht mehr ausschließlich elektrische Energie aus dem Blindleistungsfluss sondern auch aus einem Wirkleistungsfluss speichert. Dies deutet darauf hin, dass eventuell eine Unterbrechung im Submodul 22 vorliegen könnte. Unterschreitet die Spannung 60 am Zwischenkreiskondensator 44 hingegen einen weiteren, kleineren vorbestimmten Wert, so ist dies ein Hinweis auf einen Kurzschluss zum Zwischenkreiskondensator 44. In beiden Fällen kann der Slave 44 mit einem ersten Halbbrückenansteuersignal 62 den zweiten Schalter 50 dauerhaft schließen und somit den Eingang 26, 28 des Submoduls 22 kurzschließen sowie das Submodul 22 aus dem Leistungskreis der Stromrichterschaltung 4 entfernen, ohne dass die übrigen Submodule 22 davon betroffen wären.

Die Entladeschaltung 45 weist einen Entladeschalter 64 und einen Entladewiderstand 66 auf, der in Reihe zum Entladeschalter 64 geschaltet ist. Zum Entladen des Zwischenkreiskondensators 44 schließt der Slave 56 den Schalter mittels eines Entladesignals 67, so dass der Zwischenkreiskondensator 44 über den Entladewiderstand 66 kurz geschlossen ist und über diesen Entladen wird.

Zur Vermeidung zu hoher Stromspitzen kann ein Entladestrom 68 durch den Entladeschalter 64 auch geregelt werden, indem dieser stets dann durch den Entladeschalter 64 ausgeschaltet wird, wenn dieser einen bestimmten Wert überschreitet und erneut eingeschaltet wird, wenn er einen zweiten, kleineren Wert unterschreitet. Diese Form der Stromregelung wird auch als Zweipunktregelung mit Hysterese bezeichnet und ist besonders kostengünstig technisch umsetzbar. Durch die Stromregelung kann auch auf den Entladewiderstand 66 verzichtet werden.

Der Slave 56 kann das Auftreten des Fehlers in Form der zu hohen oder zu niedrigen Spannung 60 am Zwischenkreiskondensator 44 im Submodul 22 über eine Nachricht 70 an den Master 34 melden, damit dieser gegebenenfalls weitere Schutzmaßnahmen einleiten kann. Ist der als Elektromotor ausgeführte elektrische Verbraucher 6 beispielsweise zum Antrieb eines Fahrzeugs vorgesehen, so kann der Master 34 basierend auf der Nachricht 70 im Falle des Fehlers in einem Submodul 22 und dem damit verbundenen Ausfall einer als Motorwicklung ausgeführten Last 10 den Fahrzeugbetrieb in einem Notprogramm fortsetzen. Dabei wird das Fahrzeug mit einer vergleichsweise geringen Höchstgeschwindigkeit bis zur nächsten Werkstatt fortbewegt, so dass die verbleibenden, als Motorwicklung ausgeführten Lasten 10 nicht ebenfalls aufgrund einer Überbelastung ausfallen.

In einer alternativen Weiterbildung kann der Schalter 64 auch als break over diode ausgeführt sein. Eine derartige Diode schließt automatisch, wenn eine Schalterspannung 72 einen vorbestimmten Wert erreicht oder überschreitet. Auf diese Weise könnte auf eine Überspannung am Zwischenkreiskondensator 44 unverzögert reagiert werden.

Obwohl die Erfindung im Detail durch die bevorzugten Ausführungsbeispiele näher illustriert und beschrieben wurden, ist die Erfindung nicht durch diese Ausführungsbeispiele eingeschränkt. Andere Variationen können vom Fachmann hieraus abgeleitet werden, ohne den Schutzumfang der Erfindung zu verlassen.

## Patentansprüche

1. Stromrichterschaltung (4), umfassend wenigstens zwei Submodule (22) in Reihenschaltung, die über eine Induktivität elektrische Leistung aus einer eine Gleichspannung abgebenden Leistungsquelle (8) bezieht,
- wobei jedes Submodul (22) eingangsseitig eine einphasige Halbbrücke (40) und lastseitig eine einphasige Vollbrücke (42) aufweist, und
- wobei die Halbbrücke (40) und die Vollbrücke (42) gleichspannungsseitig sowie parallel hierzu ein Zwischenkreiskondensator (44) geschaltet sind,
**gekennzeichnet durch**
- eine Entladeschaltung (45) in jedem Submodul zum Entladen des Zwischenkreiskondensators (44) des jeweiligen Submoduls (22).

2. Stromrichterschaltung (4) nach Anspruch 1, **dadurch gekennzeichnet, dass** die Entladeschaltung (45) einen parallel zum Zwischenkreiskondensator (44) geschalteten Entladeschalter (64) aufweist.

3. Stromrichterschaltung (4) nach Anspruch 2, **dadurch gekennzeichnet , dass** die Entladeschaltung (45) eine in Reihe zum Entladeschalter (64) geschaltete Kurzschlusslast (66) aufweist.

4. Stromrichterschaltung (4) nach Anspruch 3, **dadurch gekennzeichnet, dass** die Kurzschlusslast (66) rein ohmsch ist.

5. Stromrichterschaltung (4) nach einem der Ansprüche 2 bis 4, **dadurch gekennzeichnet , dass** der Entladeschalter (64) geeignet ist zu schließen, wenn eine am Entladeschalter (64) abfallende Spannung (72) und/oder eine am Zwischenkreiskondensator (44) abfallende Spannung (60) eine Überspannungsschwelle erreicht hat.

6. Stromrichterschaltung (4) nach Anspruch 5, **dadurch gekennzeichnet, dass** die eingangsseitige einphasige Halbbrücke (40) einen eingangsseitig parallel geschalteten ersten Halbbrückenschalter (50) und einen zweiten Halbbrückenschalter (46) aufweist, der in Reihe zwischen den ersten Halbbrückenschalter (50) und den Zwischenkreiskondensator (44) geschaltet ist.

7. Verfahren zum Entladen eines Zwischenkreiskondensators (44) in einem Submodul (22) einer Stromrichterschaltung (4) nach einem der vorstehenden Ansprüche, **dadurch gekennzeichnet , dass** der Zwischenkreiskondensator (44) mit der Entladeschaltung (45) entladen wird, bis eine am Zwischenkreiskondensator (44) abfallende Spannung (60) eine bestimmte Entladespannungsschwelle unterschritten hat.

8. Verfahren nach Anspruch 7, **dadurch gekenn-zeichnet,**
- dass eine Fehlfunktion der Stromrichterschaltung (4) erfasst wird, und
- dass eine elektrische Leistungszufuhr zur Stromrichterschaltung (4) unterbrochen wird, nachdem die Fehlfunktion in der Stromrichterschaltung (4) erfasst ist.

9. Verfahren nach Anspruch 7 oder 8, **dadurch gekennzeichnet,**
- **dass** eine Fehlfunktion in einem Submodul (22) der Stromrichterschaltung (4) erfasst wird, und
- **dass** die Eingangsspannung (24) des Submoduls (22) mit der Fehlfunktion abgeschaltet wird.

10. Verfahren nach Anspruch 9, **dadurch gekennzeichnet, dass** die Fehlfunktion im Submodul (22) erfasst wird, wenn die Spannung (60) am Zwischenkreiskondensator (44) eine Überspannungsschwelle überschreitet.

11. Verfahren nach einem der Ansprüche 7 bis 10, **dadurch gekennzeichnet , dass** ein Eingang (26,28) des Submoduls (22) aus der Stromrichterschaltung (4) zum Abschalten einer Eingangsspannung (24) des Submoduls (22) kurzgeschlossen wird.

12. Verfahren nach einem der Ansprüche 7 bis 11, **dadurch gekennzeichnet, dass** ein Strom (68) durch die Entladeschaltung (64) auf einen Sollwert mit dem Schalter (64) als Stellglied geregelt wird.

13. Verfahren nach Anspruch 12, wobei die Regelung eine Zweipunktregelung mit eingebauter Hysterese umfasst.

14. Steuervorrichtung (56) zur Durchführung eines Verfahrens nach einem der Ansprüche 7 bis 13.

15. Elektromotor für ein Fahrzeug, umfassend mehrere Motorwicklungen und eine Stromrichterschaltung (4) nach einem der Ansprüche 1 bis 6 mit einer der Anzahl der Motorwicklungen (10) entsprechenden Anzahl von Submodulen (22), wobei jedes Submodul (22) ausgangsseitig an eine Motorwicklung (10) angeschlossen ist.
